# EUROPÄISCHE PATENTSCHRIFT

(11) **EP 0 464 892 B1**
(45) Veröffentlichungstag und Bekanntmachung des Hinweises auf die Patenterteilung: **20.12.1995**
(21) Anmeldenummer: 91201532.8
(22) Anmeldetag: 18.06.1991
(51) Int. Cl.: G01V 3/08

(54) **Anordnung zum Detektieren eines bewegten ferromagnetischen Elements**
Moving ferromagnetic element detection arrangement
Disposition pour détecter un élément ferromagnétique en mouvement

(30) Priorität: 26.06.1990 DE 4020228
(43) Veröffentlichungstag der Anmeldung: 08.01.1992
(73) Patentinhaber: Philips Patentverwaltung GmbH, 22335 Hamburg (DE); Philips Electronics N.V., 5621 BA Eindhoven (NL)
(72) Erfinder: Petersen, August, W-2359 Henstedt-Ulzburg (DE)
(74) Vertreter: Erdmann, Anton, Dipl.-Ing.

(56) Entgegenhaltungen:
- EP-A- 0 283 291
- EP-A- 0 357 200
- DE-A- 3 426 784
- US-A- 4 745 363
- BAUTEILE REPORT Bd. 14 , Nr. 3, 1976, MUNCHEN DE Seiten 89 - 93; HANS HELLMUTH CUNO: 'Einfache Berechnung von Feldplattendaten in Abhängigkeit von Magnetfeld und Temperatur'
- IEEE TRANSACTIONS ON MAGNETICS Bd. 20, Nr. 5, September 1984, NEW YORK US Seiten 954 - 956; U. DIBBERN: 'The Amount of Linearization by Barber-Poles'
- ELEKTRONIK Bd. 34, Nr. 10, Mai 1985, MüNCHEN DE Seiten 99 - 102; AUGUST PETERSEN: 'Magnetoresistive Sensoren im Kfz'

## Beschreibung

Die Erfindung betrifft eine Anordnung gemäß dem Oberbegriff des Anspruchs 1.

Anordnungen dieser Art werden beispielsweise zur Erfassung der Drehzahl bzw. der Geschwindigkeit bei Antiblockiersystemen verwandt. Der Sensor einer solchen Anordnung, der als magnetische Brückenanordnung aufgebaut sein kann, sollte im unverstimmten Zustand, also im Ruhezustand bei Abwesenheit eines bewegten Elements, möglichst keine Sensorsignalspannung aufweisen, um eine große Empfindlichkeit der Anordnung sicherzustellen. Das vom Sensor erfaßte Ruhemagnetfeld an der Poloberfläche eines Magneten muß daher bezüglich des Sensors symmetrisch sein, was aufgrund von Herstellungstoleranzen kaum erreichbar ist und daher zu unerwünschten Offsetspannungen führt.

Aus der Elektronik, Mai 1985, S. 99 bis 102, ist eine Anordnung mit einem magnetoresistiven Sensor bekannt. Durch unsymmetrische Befestigung des Sensors auf einem Permanentmagneten wird im Sensor ein parallel zur Bewegungsrichtung des bewegten Elements ausgerichtetes Magnetfeld durch ein Hilfsfeld in der Polflächenebene senkrecht zur Bewegungsrichtung überlagert.

Aus der EP-A 0357 200 ist eine Anordnung mit einem magnetoresistiven Sensor bekannt, bei der die Empfindlichkeit des Sensors mit Hilfe eines Magnetfeldkonzentrators oder einer dünnen ferromagnetischen Schicht am Permanentmagneten verbessert wird.

Aus der US-PS 4 745 363 ist eine Anordnung bekannt, bei der mit Hilfe einer Hall-Zelle und eines Magneten die Zähne eines sich drehenden Zahnrades detektiert werden. Quer zur Bewegungsrichtung der Zähne des Zahnrades ist eine Nut in einer der Polflächen des Magneten vorgesehen, um zumindest teilweise die aus einem schmalen Halbleiter streifen aufgebaute Hall-Zelle aufzunehmen, da die magnetisch durch die Zähne des Zahnrades verstimmte empfindlichste Ebene im Bereich der Oberfläche der Polfläche liegt. Trotz der Nut ragt die Hall-Zelle jedoch weit über diesen Bereich hinaus aus der Polfläche heraus, weshalb zusätzlich Elemente zum Konzentrieren des Magnetfeldes vorgesehen sind. Die Empfindlichkeit dieser Anordnung ist stark abhängig von der genauen Positionierung der Hall-Zelle in der Symmetrieachse des Magneten und wird weiter durch die herausragende Hall-Zelle und dem damit verbundenen verhältnismäßig großen Abstandes der Polfläche zum Zahnrad ungünstig beeinflußt.

Aus der DE-OS 34 26 784 A1 ist eine Anordnung mit einem magnetoresistiven Sensor zur Abgabe von elektrischen Signalen bekannt. Dieser Sensor weist einen Magneten mit einer mittigen, längs der Bewegungsrichtung eines Zahnrades ausgerichteten Nut auf, der eine magnetische Meßbrückenanordnung zugeordnet ist. Die Nut dient dazu, eine Kante am Magneten zu bilden, wodurch im wesentlichen eine homogene Magnetfeldkomponente in der Polflächenebene senkrecht zur Bewegungsrichtung erzeugt werden soll. Eine magnetische Verstimmung dieser Magnetfeldkomponente kann dann mit Hilfe der Meßbrückenanordnung detektiert werden. Die Meßbrückenanordnung wird hierzu derart etwa mittig und im Abstand zu einer Polfläche angebracht, daß sie eine Kante der Nut teilweise überdeckt. Da auch bei dieser Anordnung eine offsetspannungsfreie Positionierung äußerst schwierig ist, sind zwei nebeneinanderliegende Brückenanordnungen vorgesehen, so daß auftretende Offsetspannungen sich ausgleichen sollen. Diese aufwendige Lösung kann das Problem der offsetspannungsfreien Positionierung der Meßbrückenanordnung auch nur bedingt lösen, da dazu die Offsetspannungen betragsgleich sein müssen, was nicht immer der Fall ist.

Eine weitere Möglichkeit, eine Meßbrückenanordnung zu positionieren, ist die allerdings ebenfalls sehr aufwendige genaue Vermessung der Magnetfeldsymmetrie mit anschließender symmetrischer Montage der Meßbrückenanordnung im vermessenden Bereich.

Ein weiteres aufwendiges Verfahren ist die Neumagnetisierung des Magneten mit dem Ziel der Feldsymmetrierung im Bereich des Sensors. Dies erfordert beispielsweise einen Handhabungsautomaten, der die Position des Sensors im Feld des dann erforderlichen Impulsmagnetisiergeräts ändern kann.

Der Erfindung liegt die Aufgabe zugrunde, eine Anordnung zu schaffen, bei der eine hinsichtlich störender Offsetspannungen einfache und unkritische Positionierung eines Sensors an einem Magneten in einer Montagezone im Ruhezustand gewährleistet ist.

Erfindungsgemäß wird diese Aufgabe durch die im kennzeichnenden Teil des Anspruchs 1 genannten Merkmale gelöst.

Gemäß einer bevorzugten Ausgestaltung der Erfindung entspricht die Montagezone etwa der Breite der Nut und der Sensor ist in diesem Bereich angeordnet. Dabei weist der Sensor in Bewegungsrichtung des Elements etwa im Bereich der Breite der Nut im unverstimmten Zustand eine sensorsignalspannungsfreie Montagezone auf.

Gemäß einer bevorzugten Ausgestaltung der Erfindung ist mindestens ein quer zur Bewegungsrichtung des Elements und entsprechend der Polfläche ausgerichteter, mit Strom gezielt beaufschlagbarer elektrischer Leiter vorgesehen, dessen Einflußbereich auf der Polfläche die Montagezone bestimmt, und welcher am Rand des Magneten zur Feldsymmetrierung angeordnet ist.

Dabei ist es bereits möglich, den Sensor in Bewegungsrichtung des Elements in einem weiten mittleren Bereich anzuordnen, da eine Feldsymmetrierung in einem weiten Bereich gewährleistet ist. Dieser Bereich kann durch einen weiteren entsprechend angeordneten Leiter noch vergrößert bzw. verbessert werden. Ferner können Unsymmetrien zu beiden Seiten der Mittellinie des Magneten ausgeglichen werden. Der oder die Leiter können auch in Durchgangsöffnungen des Magneten angeordnet sein.

Durch die erfindungsgemäße Anordnung können somit Offsetspannungen, die durch herstellungsbedingte Toleranzen bereits ohne äußere Beeinflussung auftreten und die Funktion des Sensors erheblich beeinträchtigen, auf einfache Weise vermieden bzw. kompensiert werden. Eine aufwendige nachgeordnete Auswerteschaltung ist somit entbehrlich. Der durch die Erfindung unkritisch in der Montagezone anbringbare magnetoresistive Sensor kann direkt auf der Polfläche des Magneten befestigt, z.B. dort mit einem Kleber und/oder einem Stützelement aufgeklebt werden und mißt somit in der Ebene, die für die magnetischen Verstimmungen am empfindlichsten ist.

Sollte der streifenförmige Bereich in Form einer Nut gebildet sein, dann kann der flache magnetoresistive Sensor hinsichtlich der Bewegungsrichtung völlig unkritisch im Bereich der Nut, dem die Montagezone entspricht, angeordnet werden.

Ist mindestens ein elektrischer Leiter vorgesehen, dann ist sogar eine nachträgliche Kompensation bzw. Trimmung des bereits in der Montagezone montierten Sensors möglich. Die Montage des Sensors ist äußerst kostengünstig und ermöglicht eine große Empfindlichkeit des Sensors durch eine geringe Entfernung zum zu detektierenden Element und durch eine gute Nullpunkteinstellung der magnetischen Brückenanordnung.

Weitere bevorzugte Ausgestaltungen der Erfindung ergeben sich aus den abhängigen Ansprüchen.

Ein Ausführungsbeispiel wird nachfolgend unter Bezugnahme auf eine Zeichnung näher erläutert. Darin zeigt:
- Fig. 1: eine erfindungsgemäße Anordnung mit einem angedeuteten Zahnrad, einem Magneten und einem Sensor innerhalb einer Montagezone des Magneten,
- Fig. 2: eine Anordnung nach Fig. 1 mit einer die Montagezone bestimmenden Nut,
- Fig. 3: eine Anordnung gemäß Fig. 1 mit mehreren die Montagezone bestimmenden elektrischen Leitern,
- Fig. 4: eine Draufsicht auf Fig. 3, und
- Fig. 5: die Montagezone anhand des qualitativen Verlaufs der Sensorsignalspannung in Bewegungsrichtung eines zu detektierenden Elements.

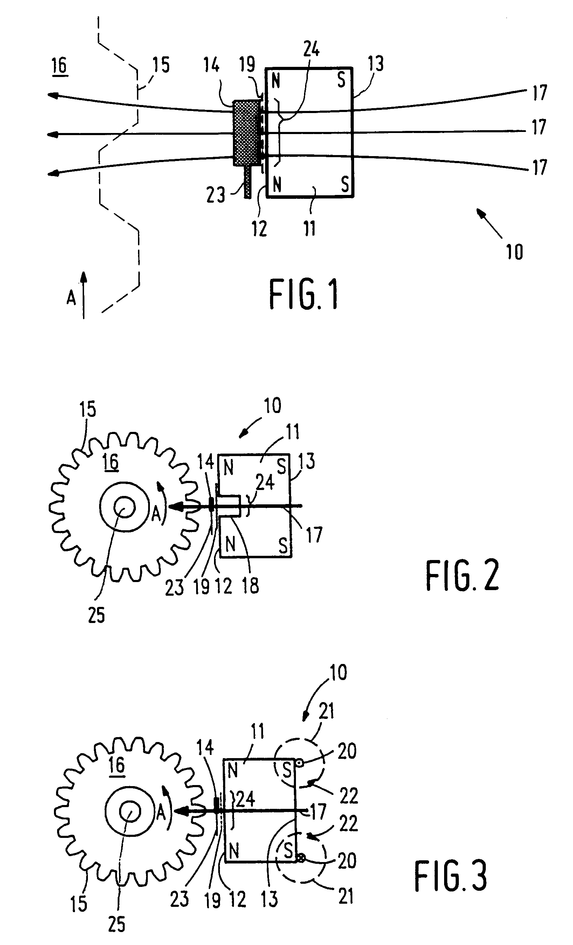

Fig. 1 zeigt eine erfindungsgemäße Anordnung 10 mit einem als Permanentmagnet ausgebildeten Magneten 11, der auf einer seiner Polflächen 12 und 13 einen etwa mittig in einer Montagezone 24 angeordneten Sensor 14 aufweist. Der Sensor 14 kann auf die Polfläche 12 mit einem Element 19 aufgeklebt oder in entsprechender Weise darauf befestigt sein. Im Abstand zur Polfläche 12 und zum Sensor 14 ist ein in Pfeilrichtung A um eine Achse (25) rotierendes Element 16 gestrichelt angedeutet. Das Element 16 ist aus ferromagnetischem Material, so daß es magnetische Verstimmungen des mit Pfeilen angedeuteten Magnetfeldes 17 des Magneten 11 hervorrufen kann. Das Element 16 kann beispielsweise der Zahn eines sich drehenden Zahnrades, eine Nut oder ein Stift sein. Hier sei darauf hingewiesen, daß in den Fig. das Element 16 nur beispielsweise als Zahnrad mit Zähnen 15 dargestellt ist.

Durch in der Fig. 1 nicht dargestellte Störstellen des Magneten 11 ist eine Symmetrierung und Parallelisierung des Magnetfeldes 17 in einer in der Zeichnungsebene liegenden den Sensor 14 etwa mittig durchsetzenden Ebene gewährleistet, durch die an der Polfläche 12 die Montagezone 24 bestimmt wird. Der Sensor 14 ist als eine magnetische Meßbrückenanordnung magnetoresistiv aufgebaut. Seine Einzelelemente weisen eine Barberpole-Konfiguration auf. Der Sensor 14 ist derart ausgerichtet, daß seine Meßrichtung der tangentialen Bewegungsrichtung des Elements 16 im Bereich des Sensors 14 entspricht, die im wesentlichen parallel zur Poloberfläche 12 des Magneten 11 verläuft.

Fig. 2 zeigt die Anordnung 10 entsprechend Fig. 1 mit einer durch eine Nut 18 gebildeten Störstelle. Die Nut 18 ist mittig in die Polfläche 12 des Magneten 11 eingearbeitet und ist in die Zeichnungsebene weisend ausgerichtet. Mit Hilfe der als Nut 18 ausgebildeten Störstelle ist eine Symmetrierung bzw. Parallelisierung des Magnetfeldes 17 im Bereich der Nut 18 auf der Polfläche 12 in einer in der Zeichnungsebene liegenden Ebene gewährleistet, die ferner den Magneten 11 mittig schneidet. Dieser Bereich bestimmt die Montagezone 24. In diesem Bereich der Polfläche 12 ist der Sensor 14 angeordnet. Hierzu kann es erforderlich sein, ein die Nut 18 überbrückendes nicht magnetisches Element 19 vorzusehen, mit welchem der Sensor 14 entsprechend mit dem Magnet 11 verklebt werden kann. Der derart angeordnete Sensor 14 kann innerhalb der Nutbreite entlang der Bewegungsrichtung hin- und hergeschoben werden, ohne daß dies eine störende Offsetspannung bzw. Sensorsignalspannung im Ruhezustand zur Folge hätte. Die Nutbreite kann dabei so gewählt werden, daß mit herkömmlichen einfachen Montagemethoden der Sensor 14 quasi immer innerhalb der Montagezone 24 montierbar ist.

Fig. 3 zeigt eine Anordnung 10 entsprechend Fig. 1 mit durch elektrische Leiter 20 gebildeten Störstellen. Die elektrischen Leiter 20 sind mit einem Strom gezielt, d.h. einem regelbaren Strom beaufschlagbar und sind beispielsweise am Rand des Magneten 11 orthogonal zur Bewegungsrichtung des Elements 16 in die Zeichnungsebene weisend angeordnet. Es ist denkbar, nur einen Leiter 20 vorzusehen und derart beispielsweise am Rand des Magneten 11 anzuordnen, daß die gewünschte Feldsymmetrierung erreicht werden kann. Es ist allerdings auch denkbar, zwei sich gegenüberliegende oberhalb und unterhalb einer horizontalen Mittellinie im Magneten 11 angeordnete Leiter 20 vorzusehen, so daß Unsymmetrien des Magnetfeldes 17 zu beiden Seiten der Mittellinie kompensiert werden können. Der Verlauf des magnetischen Feldes um die Leiter 20 herum ist gestrichelt jeweils durch eine Linie 21 angedeutet. Die Richtung dieser Magnetfelder ist abhängig von der Stromrichtung in den Leitern 20, die ihrerseits wiederum entsprechend der notwendigen Kompensation eingestellt werden. Die angedeuteten Pfeile 22 sind somit nur beispielhaft. Hier sei darauf hingewiesen, daß die Leiter 20 selbstverständlich auch in Durchgangsöffnungen des Magneten 11 angeordnet sein können. Durch die durch die Leiter 20 hervorgerufenen Störstellen ist auf der Polfläche 12 mittig in der Zeichenebene die Montagezone 24 bestimmt.

Wie bereits erwähnt, können mehrere Leiter 20 verwendet werden und mit einem den Kompensationserfordernissen angepaßten kontinuierlichen Strom beaufschlagt sein. Es ist selbstverständlich jedoch auch denkbar, die Leiter 20 nur einmalig kurzzeitig, quasi iterativ mit einem entsprechend angepaßten Strom zu beaufschlagen, um den Magnetisierungszustand des Magneten 11 im Nahbereich der Leiter 20 ganz oder teilweise beim Entmagnetisieren bzw. Umzumagnetisieren zu ändern. Während des Betriebs der Anordnung brauchen die Leiter 29 dann keinen Strom zu führen, weshalb die Leiter 20 nach der Erzeugung der Störstellen im Magneten 11 auch wieder entfernt werden können.

Infolge der Störstellen herrscht in der Montagezone 24 ein symmetrisches Magnetfeld vor, wodurch der Sensor 14 beispielsweise mittels des klebenden Elements 19 auf der Polfäche 12 angeordnet werden kann und dabei hinsichtlich der Bewegungsrichtung des Elements 16 ein weiter Bereich zur Verfügung steht, ohne dabei Sensorsignalspannungen im Ruhezustand zu erzeugen.

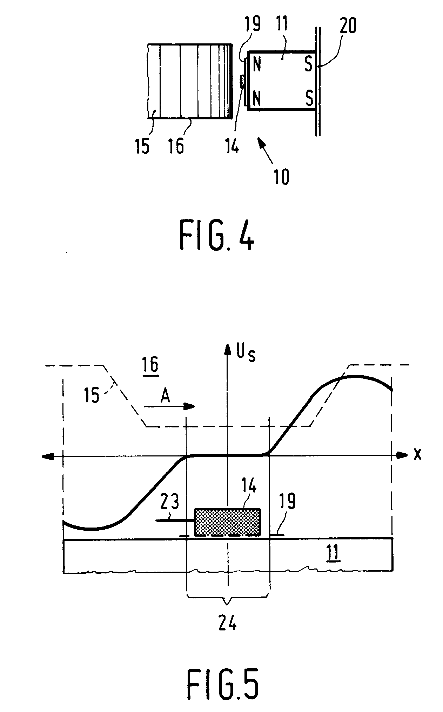

Fig. 4 zeigt eine Draufsicht auf Fig. 3. Deutlich ist ein Leiter 20 zu erkennen und die mittige Position des Sensors 14 bezüglich der Breite des Magneten 11. Der Sensor 14 ist dabei mit dem Element 19 mit dem Magnet 11 verklebt. Das Element 16 ist in Abstand im wesentlichen symmetrisch dem Sensor 14 gegenüberliegend angeordnet.

Fig. 5 zeigt den qualitativen Verlauf einer Sensorsignalspannung Us(x), die an Anschlüssen 23 des Sensors 14 im unverstimmten Zustand abgegriffen werden kann und in Bewegungsrichtung A am Magneten entsteht, wenn erfindungsgemäße Störstellen, hervorgerufen durch die Nut (18) oder die Leiter (20), vorhanden sind. Besonders deutlich ist zu erkennen, daß in einem weiten Bereich von x die Sensorsignalspannung Us im Ruhezustand Null ist. Dieser Bereich bestimmt die Montagezone 24. In ihr ist erfindungsgemäß der Sensor 14 angeordnet.

## Patentansprüche

1. Anordnung zum Detektieren eines bewegten ferromagnetischen Elements (16) mit einem Permanent-Magneten (11), dem auf einer seiner Polflächen (12) und im Abstand zum bewegten Element (16) ein Sensor (14) zugeordnet ist, welcher als magnetische Meßbrückenanordnung mit magnetoresistiven Elementen aufgebaut ist, wobei die Meßrichtung des Sensors (14) in Bewegungsrichtung des bewegten Elements (16) und parallel zur Polfläche (12) des Magneten verläuft,
dadurch gekennzeichnet, daß der Permanentmagnet (11) in seiner dem Sensor (14) zugeordneten Polfläche (12) mindestens einen quer zur Bewegungsrichtung des bewegten Elements (16) verlaufenden streifenförmigen Bereich aufweist, welcher zur Erniedrigung der Offsetspannung des Sensors (14) mit verringerter magnetischer Feldstärke dimensioniert ist.

2. Anordnung nach Anspruch 2,
dadurch gekennzeichnet, daß der Sensor (14) in der Montagezone (24) auf der Polfläche (12) des Magneten 11 mit einem nichtmagnetischen Element (19) befestigt ist.

3. Anordnung nach Anspruch 1 oder 2,
dadurch gekennzeichnet, daß der streifenförmige Bereich ein schwächer magnetisierter Materialstreifen des Permanentmagneten (11) ist.

4. Anordnung nach Anspruch 1 oder 2,
dadurch gekennzeichnet, daß der streifenförmige Bereich eine in die Oberfläche (12) des Permanentmagneten (11) eingearbeitete Nut (18) ist, die quer zur Bewegungsrichtung (A) des bewegten Elements (16) verläuft.

5. Anordnung nach Anspruch 4,
dadurch gekennzeichnet, daß die Montagezone (24) etwa der Breite der Nut (18) entspricht und der Sensor (14) in diesem Bereich angeordnet ist.

6. Anordnung nach Anspruch 3,
dadurch gekennzeichnet, daß mindestens ein quer zur Bewegungsrichtung (A) des Elements (16) und entsprechend der Polfläche (12) ausgerichteter, mit Strom gezielt beaufschlagbarer elektrischer Leiter (20) vorgesehen ist, dessen Einflußbereich auf der Polfläche (12) die Montagezone (24) bestimmt, und welcher am Rand des Magneten (11) zur Feldsymmetrierung angeordnet ist.

7. Anordnung nach Anspruch 6,
dadurch gekennzeichnet, daß zwei die schwächer magnetisierten Streifen erzeugende Leiter (20) an der dem Sensor (14) abgewandten Polfläche (13) orthogonal zur Bewegungsrichtung (A) und symmetrisch zur Mitte der Polfläche (13) angeordnet sind.

8. Anordnung nach Anspruch 7,
dadurch gekennzeichnet, daß die Leiter (20) in Durchgangsöffnungen im Magneten (11) angeordnet sind.

9. Anordnung nach Anspruch 8,
dadurch gekennzeichnet, daß der oder die Leiter (20) mit einem diskontinuierlichen derartigen Strom beaufschlagt werden, daß mindestens teilweise in der Nähe der Leiter (20) Bereiche mit einem geänderten Magnetisierungszustand entstehen, die die streifenförmigen Bereiche bilden und auch bei Abwesenheit des Stroms vorhanden bleiben.

## Claims

1. An arrangement for detecting a moved ferromagnetic element (16), comprising a permanent magnet (11) which is provided with a sensor (14) on one of its pole faces (12), at a distance from the moved element (16), which sensor is constructed as a magnetic measuring bridge arrangement with magnetoresistive elements, the measuring direction of the sensor (14) extending in the direction of movement of the moved element (16) and parallel to the pole face (12) of the magnet, characterized in that the pole face (12) of the permanent magnet (11) which faces the sensor (14), comprises at least one strip-shaped region which extends transversely of the direction of movement of the moved element (16) and which is proportioned so as to have a reduced magnetic field strength in order to reduce the offset voltage of the sensor (14).

2. An arrangement as claimed in Claim 1, characterized in that the sensor (14) is secured, by way of a non-magnetic element (19), in the mounting zone (24) on the pole face (12) of the magnet (11).

3. An arrangement as claimed in Claim 1 or 2, characterized in that the strip-shaped region is a weak-magnetic material strip of the permanent magnet (11).

4. An arrangement as claimed in Claim 1 or 2, characterized in that the strip-shaped region is a groove (18) which is provided in the surface (12) of the permanent magnet (11) and which extends transversely of the direction of movement (A) of the moved element (16).

5. An arrangement as claimed in Claim 4, characterized in that the mounting zone (24) corresponds approximately to the width of the groove (18) and that the sensor (14) is arranged in this region.

6. An arrangement as claimed in Claim 4, characterized in that there is provided at least one electrical conductor (20) which is oriented transversely of the direction of movement (A) of the element (16) and in conformity with the pole face (12), which can be specifically acted upon by current, and whose zone of influence determines the mounting zone (24) on the pole face (12), said conductor being arranged at the edge of the magnet (11) for field symmetrization.

7. An arrangement as claimed in Claim 6, characterized in that two conductors (20) which produce the weakly magnetized strip are arranged on the pole face (13) which is remote from the sensor (14) and extend orthogonally to the direction of movement (A) and symmetrically to the centre of the pole face (13).

8. An arrangement as claimed in Claim 7, characterized in that the conductors (20) are arranged in passage openings in the magnet (11).

9. An arrangement as claimed in Claim 8, characterized in that the conductor or conductors (20) is or are acted upon by a discontinuous current in such a manner that at least in part in the proximity of the conductors (20) thee are formed regions having a changed state of magnetization, which constitute the strip-shaped regions and remain present also in the absence of the current.

## Revendications

1. Disposition de détection d'un élément ferromagnétique (16) en mouvement avec aimant permanent (11) auquel est attribué sur une de ses surfaces polaires (12) et à intervalle par rapport à l'élément en mouvement (16) un détecteur (14) qui est conçu comme une disposition en pont de mesure magnétique avec des éléments magnétorésistifs, le sens de mesure du détecteur (14) s'étendant dans le sens de déplacement de l'élément en mouvement (16) et parallèlement à la surface polaire (12) de l'aimant, caractérisée en ce que l'aimant permanent (11) présente dans la surface polaire (12) tournée vers le détecteur (14) au moins une zone en bande s'étendant perpendiculairement au sens de déplacement de l'élément en mouvement (16) qui est dimensionnée pour réduire la tension offset du détecteur (14) avec une intensité de champ magnétique réduite.

2. Disposition selon la revendication 1, caractérisée en ce que le détecteur (14) est fixé dans la zone de montage (24) sur la surface polaire (12) de l'aimant (11) à un élément non magnétique (19).

3. Disposition selon la revendication 1 ou 2, caractérisée en ce que la zone en bande est une bande de matériau faiblement magnétisée de l'aimant permanent (11).

4. Disposition selon la revendication 1 ou 2, caractérisée en ce que la zone en bande est un écrou (18) incorporé dans la surface (12) de l'aimant permanent (11) qui s'étend perpendiculairement au sens de déplacement (A) de l'élément en mouvement (16).

5. Disposition selon la revendication 4, caractérisée en ce que la zone de montage (24) correspond approximativement à la largeur de l'écrou (18) et le détecteur (14) est disposé dans cette zone.

6. Disposition selon la revendication 3, caractérisée en ce qu'au moins un conducteur électrique (20) pouvant être alimenté en courant de manière ciblée et orienté perpendiculairement au sens de déplacement (A) de l'élément (16) conformément à la surface polaire (12) est prévu, que sa zone d'influence sur la surface polaire (12) détermine la zone de montage (24) et qu'il est disposée au bord de l'aimant (11) en vue d'une symétrisation du champ.

7. Disposition selon la revendication 6, caractérisée en ce que deux conducteurs (20) produisant la bande plus faiblement magnétisée sont disposés sur la surface polaire (13) opposée au détecteur (14) orthogonalement par rapport au sens de déplacement (A) et symétriquement par rapport au centre de la surface polaire (13).

8. Disposition selon la revendication 7, caractérisée en ce que les conducteurs (20) sont disposés dans les ouvertures traversantes de l'aimant (11).

9. Disposition selon la revendication 8, caractérisée en ce que le ou les conducteurs (20) sont alimentés en un courant discontinu tel qu'il se forme à proximité des conducteurs (20), du moins en partie, des zones dont l'état de magnétisation est modifié qui forment les zones en forme de bande et subsistent même en l'absence de courant.
